(19) Europäisches Patentamt / European Patent Office / Office européen des brevets

(11) **EP 4 302 903 A1**

(12) **DEMANDE DE BREVET EUROPEEN**

(43) Date de publication:
**10.01.2024   Bulletin 2024/02**

(21) Numéro de dépôt: 23184260.0

(22) Date de dépôt: **07.07.2023**

(51) Classification Internationale des Brevets (IPC):
**B22F 3/105** (2006.01)     **B22F 3/14** (2006.01)
**B22F 3/24** (2006.01)      **B28B 1/00** (2006.01)
**B28B 3/02** (2006.01)      **B28B 7/34** (2006.01)
**B33Y 10/00** (2015.01)     **B33Y 40/20** (2020.01)
**B33Y 80/00** (2015.01)     **C04B 35/14** (2006.01)
**C04B 35/48** (2006.01)     **C04B 35/488** (2006.01)
**C04B 35/645** (2006.01)    **B22F 3/10** (2006.01)
**B22F 3/12** (2006.01)

(52) Classification Coopérative des Brevets (CPC):
**B22F 3/105; B22F 3/14; B22F 3/24; B28B 1/001;**
**B28B 3/025; B28B 7/346; B33Y 10/00;**
**B33Y 40/20; B33Y 80/00; C04B 35/14;**
**C04B 35/481; C04B 35/488; C04B 35/645;**
B22F 3/1291; B22F 2003/1042;          (Cont.)

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité:  **08.07.2022   FR 2207046**

(71) Demandeur: **Commissariat à l'énergie atomique
et aux énergies alternatives
75015 Paris (FR)**

(72) Inventeurs:
• **BOIDOT, Mathieu
  38054 Grenoble Cedex 9 (FR)**
• **LAUCOURNET, Richard
  38054 Grenoble Cedex 9 (FR)**

(74) Mandataire: **Cabinet Nony
11 rue Saint-Georges
75009 Paris (FR)**

(54)   **PROCÉDÉ DE FABRICATION D'UNE PIÈCE DE FORME COMPLEXE ET D'UNE CONTRE-FORME DENSIFIABLE UTILE POUR LA PRÉPARATION DE LADITE PIÈCE**

(57)     La présente invention concerne un procédé de fabrication d'une pièce de forme complexe par frittage par compaction uni-axiale et à chaud, caractérisé en ce qu'il comprend au moins les étapes consistant à :
- Disposer d'un matériau pulvérulent M1 dédié à constituer ladite pièce de forme complexe,
- Disposer d'une contre-forme de ladite pièce de forme complexe,
- Densifier par frittage par compaction uni-axiale, ledit matériau M1 au contact de ladite contre-forme, en formant le cas échéant une phase intermédiaire,
- Disposer de l'ensemble pré-pièce/contre-forme densifié ainsi formé, et
- Décocher ladite pièce de forme complexe dudit ensemble,
caractérisé en ce que ladite contre-forme est sous une forme densifiable et constituée d'un matériau M2 comprenant au moins un composant matriciel A et au moins un composé B inorganiques et en ce que ledit décochage comprend au moins la solubilisation sélective dudit composé B et/ou de l'éventuelle phase intermédiaire.

EP 4 302 903 A1

(52) Classification Coopérative des Brevets (CPC):
(Cont.)
B22F 2003/1051; B22F 2003/244;
B22F 2003/247; C04B 2235/666

**Description**

**Domaine technique**

La présente invention se rapporte à la réalisation de pièces à géométrie complexe par des techniques de métallurgie des poudres utilisant une compaction uni-axiale pour le frittage.

Plus précisément, elle vise à proposer un matériau convenant à une utilisation comme contre-forme à l'égard de pièces à géométrie complexe ainsi qu'une méthode permettant d'ajuster le choix du matériau de cette contre-forme à celui du matériau considéré pour la pièce de forme complexe attendue, en vue d'optimiser les qualités de cette pièce notamment en termes d'homogénéité et de densité.

**Technique antérieure**

Au sens de l'invention et en relation avec un mode de fabrication par compaction uni-axiale, une pièce de forme complexe est une pièce qui possède un trou dans l'axe de compression, des parties distinctes en termes de différences de hauteur, des faces inclinées (non perpendiculaires, non parallèles) à la direction de compaction, une géométrie ne présentant pas d'axe de révolution et/ou des faces non planes.

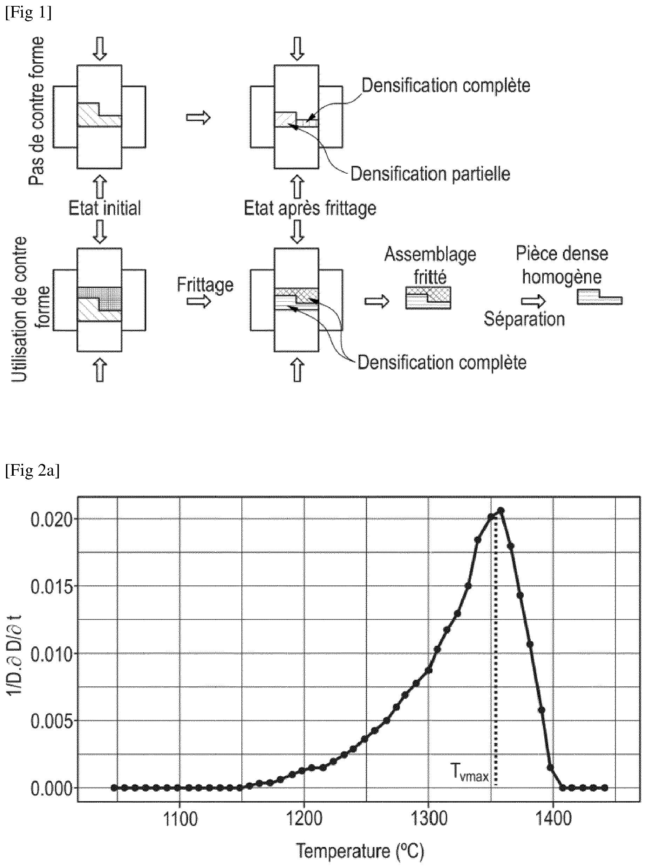

Comme illustré en figure 1, la fabrication, par compaction uni-axiale, d'une pièce de forme complexe possédant une hauteur non homogène et en particulier un décalage de hauteur significatif, nécessite de privilégier la mise en oeuvre d'une contre-forme de forme ajustée en conséquence, pour s'affranchir des problématiques de compactions différentielles liées à des hauteurs différentes de la pièce à densifier. L'utilisation d'une contre-forme adaptée permet donc d'accéder à une densification plus homogène.

Toutefois, cette densification plus homogène demeure par ailleurs susceptible d'être altérée par les températures de début et de fin de densification, dites encore respectivement températures minimales et maximales de frittage, la manifestation d'une réactivité chimique potentielle entre le matériau de la pièce à fabriquer et le matériau de la contre-forme, une différence de coefficient de dilatation significative entre ces deux matériaux et/ou un décochage difficile de la pièce de forme complexe de la contre-forme.

Ainsi, lors de l'étape de densification, le matériau de la pièce fabriquée et celui constituant la contre-forme doivent présenter entre eux le moins de réactivité possible et à tout le moins une réactivité contrôlée, c'est-à-dire prédictible par des calculs thermodynamiques, conduisant à la formation d'une phase entre la pièce et la contre-forme pouvant être aisément retirée.

Pour minimiser voire s'affranchir de ce risque de réactivité, il est déjà proposé de considérer une couche déformable en papier graphite (papyex®) ou une interface en polymère graphitisable pour séparer la pièce à fabriquer de la contre-forme. Malheureusement, l'utilisation de ce type de séparation à base de graphite conduit à une contamination de surface de la pièce, principalement avec du carbone.

Par ailleurs et comme évoqué ci-dessus, lors du refroidissement conjoint des contre-forme et pièce de forme complexe fabriquée, intervenant à la fin du cycle de densification, les coefficients de dilatation de la pièce et de la contre-forme doivent idéalement être similaires. Or, cette exigence est particulièrement difficile à satisfaire. Ainsi, une insertion de la pièce dans la contre-forme oriente vers un coefficient de dilatation thermique (« coefficient of thermal expansion » en anglais ou dit encore CTE) de contre-forme inférieur au CTE de la pièce et vice versa.

Enfin, après frittage simultané de la pièce de forme complexe à fabriquer et de la contre-forme, le matériau de contre-forme doit être éliminé sans altérer l'intégrité du matériau constituant la pièce voire en préservant ou non, l'intégrité de toute phase susceptible de s'être développée en surface de la pièce lors de sa densification comme par exemple un oxyde métallique formé en surface d'une pièce en métal.

A la connaissance des inventeurs, il demeure difficile de disposer d'une contre-forme apte à satisfaire l'ensemble de ces exigences.

La présente invention vise précisément à répondre à ce besoin.

**Résumé de l'invention**

Plus précisément, elle concerne un procédé de fabrication d'une pièce de forme complexe par frittage par compaction uni-axiale et à chaud, caractérisé en ce qu'il comprend au moins les étapes consistant à :

- Disposer d'un matériau pulvérulent M1 dédié à constituer ladite pièce de forme complexe,
- Disposer d'une contre-forme de ladite pièce de forme complexe,
- Densifier par frittage par compaction uni-axiale et à une température variant de 300 à 2200°C, ledit matériau M1 au contact de ladite contre-forme, en formant le cas échéant une phase intermédiaire à l'interface de ladite pièce de forme complexe et de ladite contre-forme densifiées,

- Disposer de l'ensemble pré-pièce/contre-forme densifié ainsi formé, et
- Décocher ladite pièce de forme complexe dudit ensemble,

caractérisé en ce que ladite contre-forme est sous une forme densifiable et constituée d'un matériau M2 comprenant au moins un composant matriciel A et au moins un composé B inorganiques et en ce que ledit décochage comprend au moins la solubilisation sélective dudit composé B et/ou de l'éventuelle phase intermédiaire.

En particulier, toute la surface des faces de la contre-forme représentant la forme complémentaire de la pièce à former est au contact du matériau M1 lors de l'étape de densification.

Par « densifiable », on entend que la contre-forme peut être densifiée, notamment que la densité de la contre-forme peut être augmentée par un procédé thermomécanique tel qu'un frittage à chaud par compaction. De préférence, cette contre-forme, sous une forme densifiable, est au préalable partiellement densifiée et présente un taux de porosité résiduel lui permettant une densification ultérieure lors de la fabrication par densification de la pièce M1.

Contre toute attente, les inventeurs ont ainsi constaté qu'il est possible d'optimiser l'étape de décochage des pièces de forme complexe de leur contre-forme sous réserve de privilégier un choix de matériau spécifique pour ces contre-formes.

Plus précisément, les inventeurs ont constaté que le choix d'un matériau composite, comprenant un composant matriciel et un composé annexe, en l'occurrence un composé dit B, dispersé dans cette matrice et de solubilité distincte du matériau M1 permet d'optimiser le décochage. La solubilisation sélective de ce composé en fin de densification permet d'altérer significativement la cohésion de la contre-forme pour permettre ensuite une élimination mécanique du résidu de celle-ci sans altérer l'intégrité de la surface de la pièce de forme complexe fabriquée.

Une alternative de cette technique est notamment illustrée dans le brevet EP 2 831 306 B1 où il est réalisé une séparation sélective d'un composant hybride ayant une couche de jonction entre une entité métallique et une entité céramique à base de silicate et en particulier une céramique stabilisée c'est-à-dire contenant outre un silicate alcalin, un alcaliborosilicate, un silicate alcalino-terreux, ou un borosilicate alcalino-terreux contenant au moins un semi-métal ou métalloïde. La méthode de séparation proposée consiste à exposer ce composant hybride à une température élevée, entre 850°C et 1150°C, et à une atmosphère réductrice contenant des halogènes. Les atomes d'halogène attaquent sélectivement la phase à base de silicium et rompent ainsi la connexion entre l'entité métallique et l'entité céramique via la dissolution des silicates alcalins.

Par ailleurs, les inventeurs ont constaté qu'il est possible de s'affranchir des phénomènes indésirables d'interaction chimique et de différence de coefficient de dilatation thermique significative entre les matériaux constituant respectivement la pièce de forme complexe et la contre-forme, sous réserve d'ajuster la composition du matériau de la contre-forme.

Les inventeurs ont également constaté que la composition chimique du matériau M2 de même que le niveau de densification de la contre-forme peuvent être ajustés pour conférer à cette contre-forme un profil de densification par frittage semblable à celui manifesté par le matériau dit M1, devant constituer la pièce à fabriquer, lors de sa densification dans l'outillage de frittage.

En particulier, la compatibilité des gammes de température de frittage des matériaux M1 et M2 et de leurs vitesses de densification permet avantageusement de limiter les contraintes mécaniques présentes dans la pièce formée à l'issue du frittage.

Ainsi, les matériaux M1 et M2 possèdent avantageusement des plages de température de densification par frittage telles que la température maximale de frittage Tmax(M1) du matériau M1 est inférieure ou égale à la température maximale de frittage Tmax(M2) du matériau M2. En particulier, les matériaux M1 et M2 possèdent des cinétiques de densification telles que la différence entre les températures auxquelles les matériaux M1 et M2 sont au maximum de leur vitesse de densification respective, « |Tvmax (M1) - Tvmax (M2)1 » est inférieure à 50°C.

Selon une variante de réalisation avantageuse, la température maximale de frittage Tmax(M1) du matériau M1 peut aussi être supérieure à la température pour laquelle le matériau M2 est au maximum de vitesse de densification Tvmax(M2).

Selon une autre variante de réalisation avantageuse, les matériaux M1 et M2 peuvent notamment posséder des plages de température de densification par frittage telles que la différence entre les températures minimales de frittage Tmin(M1) du matériau M1 et Tmin(M2) du matériau (M2), « |Tmin (M1) - Tmin (M2)1 » est inférieure à 300°C, voire inférieure à 100°C, la température Tmin(M2) étant de préférence inférieure au maximum de vitesse de densification Tvmax(M1) du matériau M1.

Enfin, le procédé selon l'invention permet en outre de s'affranchir d'étapes d'usinage et d'une perte de matériau M1, et en général de simplifier la fabrication des pièces et/ou leur coût.

Ainsi, selon un autre de ses aspects, la présente invention propose un procédé de fabrication d'une contre-forme densifiable, utile pour la préparation d'une pièce de forme complexe selon le procédé de fabrication d'une pièce de forme complexe selon l'invention, comprenant au moins les étapes consistant à

- Réaliser par fabrication additive un objet organique/inorganique à partir d'au moins un liant organique et d'au moins un mélange comprenant au moins un composant matriciel A et au moins un composé B, inorganiques,
- Délianter ledit objet organique/inorganique ainsi formé pour en éliminer sa composante organique,
- Fritter ledit objet ainsi obtenu pour former une contre-forme densifiable.

En particulier, ce procédé de fabrication d'une contre-forme densifiable comprend en outre au moins les étapes consistant à

- disposer de la densité relative du matériau devant être densifié par frittage par compaction uni-axiale pour former une pièce de forme complexe, au contact de ladite contre-forme à fabriquer et
- ajuster le frittage dudit objet pour former une contre-forme dont la densité relative est telle que sa différence avec la densité relative du matériau devant être fritté à son contact est de moins de 25 %, en particulier moins de 20 %, de préférence moins de 5 %.

Selon encore un autre de ses aspects, la présente invention propose une méthode utile pour déterminer l'adéquation d'un matériau M2 à constituer la contre-forme d'une pièce de forme complexe à former par frittage par compaction uni-axiale d'un matériau M1, ladite méthode comprenant au moins les étapes consistant à

- Disposer de la courbe de la vitesse de densification par frittage par compaction uni-axiale et en fonction de la température, du matériau M1, CVD1,
- Disposer de la courbe de la vitesse de densification par frittage par compaction uni-axiale et en fonction de la température, du matériau M2, CVD2 et,
- Déterminer si l'écart des températures minimales de frittage et maximales de frittage entre chacun des matériaux M1 et M2, est inférieur ou égal à 50°C,

un écart inférieur ou égal à 50°C traduisant l'adéquation du matériau M2 à former une contre-forme pour la réalisation de ladite pièce de forme complexe.

Par « densité relative », on entend désigner, au sens de l'invention, le rapport de la densité d'un matériau ou objet comme par exemple une contre-forme, sur la densité réelle de ce même matériau ou objet, cette densité réelle étant notamment mesurée par pycnométrie hélium. Par exemple, une pièce parfaitement dense possède une densité relative de 100%. Ainsi, la densité relative, exprimée en %, peut être déterminée en comparant la densité réelle, notamment mesurée par pycnométrie hélium, avec la densité d'un lit de poudre au repos, notamment mesurée dans une éprouvette graduée.

Il est rappelé que par « densifiable », on entend que la contre-forme peut être densifiée, notamment que la densité de la contre-forme peut être augmentée par un procédé thermomécanique tel qu'un frittage à chaud par compaction. Cette définition entend également désigner une pièce ayant subi une densification mais qui est encore densifiable. Une telle contre-forme peut être également une contre-forme partiellement densifiée.

En particulier, la densité relative de la contre-forme densifiable peut être égale à celle du lit de poudre qui constituera la pièce, autrement dit du matériau M1, à +/- 20%.

**Description détaillée**

**Procédé de préparation d'une pièce de forme complexe selon l'invention**

Comme signifié précédemment l'originalité du procédé de l'invention repose plus particulièrement sur l'ajustement du choix d'une part, du matériau devant constituer la contre-forme et d'autre part, du degré de densification de cette contre-forme pour la fabrication d'une pièce de forme complexe par frittage par compaction uni-axiale d'un matériau, dit M1, déterminé.

Matériau M1

D'une manière générale, le matériau M1 est un matériau pulvérulent. Il peut posséder une taille particulaire variant de 0,5 $\mu$m à 1000 $\mu$m, en particulier de 20 $\mu$m à 500 $\mu$m.

Le matériau M1 peut être choisi parmi les céramiques, métaux, alliages métalliques, et leurs mélanges.

De préférence, il comprend au moins un métal, un alliage métallique et/ou une céramique. En particulier, le matériau M1 peut comprendre au moins du titane, du cuivre, un alliage de titane, un alliage de nickel, un alliage de fer, un alliage d'aluminium, un alliage de cuivre, du carbure de titane, du carbure de tungstène, du carbure de tungstène-cobalt, du nitrure d'aluminium, du nitrure de gallium, du nitrure de silicium, du silicium, un alliage de silicium, ou leurs mélanges, de préférence au moins du titane, du cuivre, un alliage de titane, un alliage de nickel, du carbure de tungstène-cobalt ou leurs mélanges, et plus préférentiellement comprend au moins du titane, un alliage de titane et/ou du carbure de tungstène-cobalt.

En particulier, le matériau M1 est un mélange de plusieurs alliages, métaux et/ou céramiques.

Il peut avantageusement être figuré par du carbure de tungstène, WC comprenant 6 à 12% de Co, encore nommé WC/x Co (x de 0 à 12%), du TA6V, du TiAl, ou du Ti.

Comme précisé ci-dessus, ce matériau M1 est dédié à être fritté par compaction uni-axiale pour former une pièce de forme complexe dans un outillage de frittage au contact d'une contre-forme.

Au cours de cette fabrication, la contre-forme utilisée est donc exposée aux conditions de frittage retenues pour densifier le matériau M1 et les inventeurs ont constaté qu'il est possible d'optimiser les qualités de la pièce de forme complexe formée à son contact si la composition et la densité de cette contre-forme sont précisément ajustées.

Contre-forme selon l'invention

Pour mémoire, une contre-forme présente une géométrie correspondant au négatif de la pièce à former avant sa densification. Il est donc préférable de connaitre le taux de densification appliqué lors des étapes suivantes pour déterminer la géométrie de la contre-forme permettant de former la pièce de forme complexe de géométrie contrôlée. Par exemple, une face de la contre-forme représente la forme complémentaire de la pièce à former, dans ses proportions avant compaction.

Il est également rappelé qu'une contre-forme peut être formée d'un seul objet, ou d'un assemblable de plusieurs objets. De préférence, la contre-forme est dans le cadre de l'invention formée d'un seul bloc.

Tout d'abord, la contre-forme considérée selon l'invention est formée d'un matériau M2 possédant au moins un composant matriciel A et au moins un composé B. Ce composé B est bien entendu différent de A et non matriciel.

A et B sont tous deux de nature inorganique c'est-à-dire non constitués exclusivement d'atomes de carbone, d'hydrogène, d'azote, de soufre et/ou d'oxygène.

Le composé B est avantageusement dispersé dans le composant A. De préférence, la teneur en composé(s) B dans le matériau M2 est supérieure ou égale au seuil de percolation volumique du composé B dans le composant A. Lors de l'étape de décochage, une attaque chimique du composé B peut alors atteindre le coeur du matériau composite M2, et laisser place, après dissolution du matériau B, à un matériau de porosité ouverte formé du matériau A. Selon un mode de réalisation particulier, le matériau A peut partiellement voire totalement se dissoudre lors de l'étape de décochage.

En particulier, le matériau M2 peut posséder une teneur en composé(s) B variant de 0,5 % en poids à 50 % en poids, de préférence de 1 % en poids à 20 % en poids, voire de 4 % à 16 % en poids, par rapport à son poids total. En fonction du rapport molaire des différents composés dans la contre-forme, la gamme de température de densification de cette contre-forme peut être notamment avantageusement ajustée.

Le rapport molaire des différents composés dans la contre-forme peut également permettre d'ajuster le CTE de la contre-forme à celui de la pièce de forme complexe.

A et B peuvent posséder des solubilités différentes de manière à permettre une solubilisation sélective de B au contact d'un solvant qui par ailleurs est obligatoirement non solubilisant à l'égard du matériau M1. Ainsi la dissolution sélective du composé B de la contre-forme considérée pour le décochage de l'ensemble contre-forme/pièce de forme complexe permet de générer une porosité au niveau du matériau M2 qui altère sa cohésion mécanique et permet l'élimination mécanique de la contre-forme résiduelle sans altérer les qualités de surface de la pièce de forme complexe ainsi isolée de l'ensemble.

Le composant A est qualifié de matriciel au motif qu'il se présente sous la forme d'une structure homogène et continue dans laquelle est dispersé de préférence de manière homogène au moins un composé B.

Ce composant A peut être formé d'un unique composé ou se présenter sous la forme d'un mélange intime de plusieurs composés par exemple à l'image des mélanges décrits ci-après. Ce composant A peut être ainsi choisi parmi les alliages, les céramiques, et les semi-métaux. Le composant matriciel A peut être choisi parmi la silice ($SiO_2$), la zircone yttriée dite « poudre d'YSZ », le nitrure de silicium ($Si_3N_4$), le carbure de bore ($B_4C$), le carbure de silicium (SiC), le nitrure de bore, notamment hexagonal (h-BN), et leurs mélanges et de préférence comprend au moins de la silice.

Le matériau M2 peut comprendre au moins un composé B choisi parmi le zircon ($ZrSiO_4$), un nitrure de bore (BN) et la silice, et de préférence parmi le zircon, le nitrure de bore hexagonal (h-BN) et la silice, notamment parmi le zircon et la silice, et plus préférentiellement comprend au moins le zircon.

A titre représentatif et non limitatif des matériaux M2 convenant à l'invention peuvent être notamment cités les mélanges $h-BN/SiO_2$, $Si_3N_4/SiO_2$, $SiC/SiO_2$, $h-BN/ZrSiO_4$, $Si_3N_4/ZrSiO_4$, $SiC/ZrSiO_4$, ou $SiO_2/ZrSiO_4$. Par exemple, le matériau M2 peut être un composite $h-BN/SiC/Si_3N_4$, $h-BN/SiO_2$ ou $SiO_2/ZrSiO_4$, de préférence un composite $h-BN/SiO_2$ ou $SiO_2/ZrSiO_4$, et plus préférentiellement un composite $SiO_2/ZrSiO_4$.

Il est à noter qu'en fonction de la fraction molaire de $ZrSiO_4$ dans un matériau $SiO_2/ZrSiO_4$ constituant la

contre-forme, la gamme de température de densification de la contre-forme peut être ajustée, avec une gamme accessible comprise entre 1150°C et 1750°C, qui peut être étendue en diminuant la vitesse de chauffe à 20°C/min voire 10°C/min.

Selon un mode de réalisation particulier, le procédé met en présence un couple de matériaux M1/M2 choisi parmi WC comprenant 6 à 12% de Co (M1) / Composite $SiO_2$/$ZrSiO_4$ (M2), TA6V (M1) / Composite $SiO_2$/$ZrSiO_4$ (M2), TiAl (M1) / Composite $SiO_2$/$ZrSiO_4$ (M2), Ti (M1) / Composite $SiO_2$/$ZrSiO_4$ (M2), WC (M1) / Composite SiC/h-BN (M2), WC (M1) / Composite $Si_3N_4$/h-BN (M2), WC (M1) / Composite h-BN/$SiO_2$ (M2), WC (M1) / Composite h-BN/SiC/$Si_3N_4$ (M2), WC comprenant 6 à 12% de Co (M1) / Composite SiC/ h-BN (M2), WC comprenant 6 à 12% de Co (M1) / $Si_3N_4$/h-BN (M2), WC comprenant 6 à 12% de Co (M1) / h-BN/$SiO_2$ (M2), WC comprenant 6 à 12% de Co (M1) / h-BN/SiC/$Si_3N_4$ (M2), Ti (M1) / Composite YZS/ $SiO_2$ (M1), TiAl/ Composite YZS/ $SiO_2$ (M1), TA6V (M1) / Composite YZS/ $SiO_2$, ou couple Cu (M1) / Composite $SiO_2$/ $ZrSiO_4$.

De préférence le procédé met en présence un couple de matériaux choisi parmi Ti (M1) / Composite $SiO_2$/ $ZrSiO_4$ (M2), TiAl (M1) / Composite $SiO_2$/ $ZrSiO_4$ (M2), TA6V (M1) / Composite $SiO_2$/ $ZrSiO_4$ (M2), WC-xCo (x=0 à 12at. %) (M1) / Composite $SiO_2$/ $ZrSiO_4$ (M2), et plus préférentiellement un couple de matériaux TiAl (M1) / Composite $SiO_2$/$ZrSiO_4$ (M2).

En particulier, une phase à l'interface entre le composant matriciel A et le composé B peut se former lors de la densification de la contre-forme, et peut plus particulièrement être solubilisée lors de l'étape de décochage.

La contre-forme considérée selon l'invention est également densifiable.

Plus précisément, la contre-forme densifiable possède une densité relative telle que sa différence avec la densité relative du matériau M1 non densifié est de moins de 25 %, en particulier moins de 20 %, de préférence moins de 5 %.

Le choix du matériau M2 de ladite contre-forme permet notamment d'ajuster l'achèvement de la densification de cette contre-forme dans une gamme de température proche de celle du matériau M1. Cet ajustement des gammes de température de densification permet avantageusement de garantir une homogénéité de la densité de la pièce à former, et de s'affranchir de contraintes résiduelles entre les deux matériaux densifiés, qui serait préjudiciable à l'intégrité de la pièce de forme complexe fabriquée.

La gamme de température de frittage adaptée à la densification de chacun des matériaux peut en particulier être déterminée selon la méthode décrite dans le chapitre intitulé Matériels et Méthodes figurant ci-après.

De manière plus détaillée, la gamme de température de frittage des matériaux peut être déterminée grâce à l'acquisition de la vitesse de densification dans un outillage de frittage, notamment tel que décrit ci-après, par compaction uni-axiale à chaud et qui sera celui utilisé pour la réalisation de la pièce de forme complexe considérée.

Dans un exemple de réalisation, des outillages en graphite sont utilisés et la méthode de densification choisie est le SPS (Spark plasma sintering).

Pour chaque matériau, deux acquisitions sont réalisées.

Une première acquisition est réalisée en introduisant le matériau sous forme pulvérulente dans l'outillage de frittage et en chauffant l'ensemble jusqu'à densification finale, encore dite densification totale, avec une rampe de montée en température représentative, par exemple 100K/min. L'ensemble est ensuite refroidi.

Une seconde acquisition est réalisée dans les mêmes conditions avec l'assemblage ainsi refroidi et densifié.

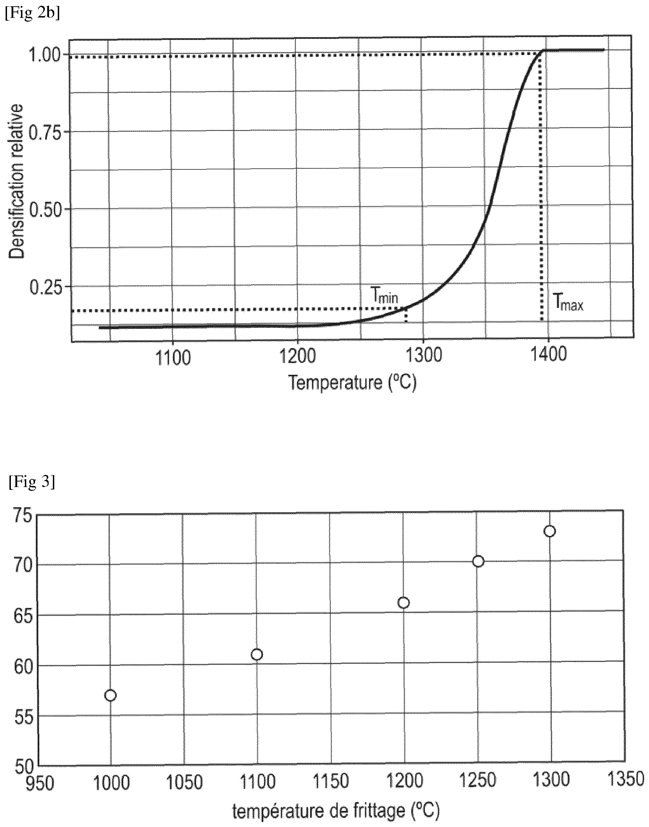

A l'aide des données de déplacement des deux acquisitions et de la mesure de la densité finale de la pièce, des courbes représentant la densification et la vitesse de densification relative en fonction de la température peut être obtenue à l'image de celles illustrées en figure 2. Les bornes inférieures et supérieures de l'intervalle de densification sont extraites et le point correspondant au maximum de vitesse de densification Tvmax également. La borne inférieure Tmin correspond à une densification de 10% et la borne supérieure Tmax à 99% de densification.

De préférence, les matériaux M1 et M2 possèdent avantageusement des plages de température de densification par frittage telles que la température maximale de frittage Tmax(M1) du matériau M1 est inférieure ou égale à la température maximale de frittage Tmax(M2) du matériau M2. En particulier, les matériaux M1 et M2 possèdent des cinétiques de densification telles que la différence entre les températures auxquelles les matériaux M1 et M2 sont au maximum de leur vitesse de densification respective, « |Tvmax (M1) - Tvmax (M2)1 » est inférieure à 50°C.

Selon une variante de réalisation avantageuse, la température maximale de frittage Tmax(M1) du matériau M1 peut aussi être supérieure à la température pour laquelle le matériau M2 est au maximum de vitesse de densification Tvmax(M2).

Selon une autre variante de réalisation avantageuse, les matériaux M1 et M2 peuvent notamment posséder des plages de température de densification par frittage telles que la différence entre les températures minimales de frittage Tmin (M1) du matériau M1 et Tmin (M2) du matériau (M2), « |Tmin (M1) - Tmin (M2)1» est inférieure à 300°C, voire inférieure à 100°C, la température Tmin (M2) étant de préférence inférieure au maximum de vitesse de densification Tvmax (M1) du matériau M1.

En particulier, le matériau M2 de ladite contre-forme et le matériau M1 densifient dans une gamme de température de frittage dont l'écart entre d'une part les températures minimales de frittage Tmin et d'autre part les températures maximales de frittage Tmax est inférieur à 50°C voire de préférence inférieur à 20°C.

La densification du matériau M1 au contact de la contre-forme selon l'invention peut être réalisée avec un appareillage nommé « outillage de frittage » et formé d'une matrice de frittage et de deux pistons. L'outillage de frittage forme une cavité, généralement cylindrique, entre une matrice de frittage fixe et deux pistons se faisant face et pouvant se déplacer suivant un unique axe. Lors du déplacement uni-axial des pistons, le volume de la cavité varie. L'outillage de frittage est généralement en graphite.

La densification peut être réalisée en plaçant le ou les matériaux à densifier dans la cavité de l'outillage de frittage. En particulier, la contre-forme est d'abord placée dans la cavité, puis le volume de cavité restant est complété par le matériau M1 destiné à former la pièce souhaitée. En particulier, la contre-forme et le matériau M1 destiné à former la pièce souhaitée ne sont pas séparés par un papier souple.

Selon un mode de réalisation particulier, la contre-forme et le matériau M1 sont séparés de l'outillage de frittage par un papier souple. En particulier, ce papier souple est formé d'un matériau conducteur électrique et/ou thermique. Il permet alors d'assurer une conduction électrique avec les matériaux à densifier, avantageuse pour le chauffage par effet Joule au cours du frittage SPS, et/ou thermique, avantageux pour chauffer rapidement les matériaux à densifier. De préférence, ce papier souple est formé d'un matériau conducteur électrique et thermique, de préférence en papier graphite souple, ou en papier graphite souple recouvert d'une couche de nitrure de bore hexagonal ou de métal réfractaire, en particulier en papier graphite souple. A titre d'exemple de papier graphite souple peut être cité le papyex®. En alternative, le papier graphite souple peut être remplacé par un métal réfractaire, éventuellement recouvert d'une couche de nitrure de bore hexagonal, notamment pour prévenir de la pollution des pièces par le carbone du papier graphite.

Selon un premier mode de réalisation particulier, la contre-forme et le matériau M1 sont densifiés sans formation d'une phase intermédiaire à l'interface de la pièce de forme complexe et de la contre-forme.

Selon un second mode de réalisation particulier, une phase intermédiaire se forme à l'interface de la pièce de forme complexe et de la contre-forme. Cette phase intermédiaire est notamment le produit d'une réaction entre le matériau de la contre-forme et le matériau M1 ou un oxyde résultant d'un échange oxygène entre le matériau de la contre-forme et le matériau M1. En particulier, cette phase intermédiaire peut être formée d'un oxyde métallique ou de silicium, d'un carbure métallique ou de silicium, d'un nitrure métallique ou de silicium, ou d'un composé intermétallique.

La phase intermédiaire est soit destinée à être éliminée lors du décochage, soit destinée à former un revêtement en surface de la pièce de forme complexe.

Dans le cas où il n'est pas souhaité garder cette phase intermédiaire (dite encore interphase), au moins l'une des conditions qui suit est privilégiée parmi :

- Un CTE de cette phase, différent des matériaux de pièce et de contre-forme permettant la séparation par action themomécanique lors du refroidissement ;
- Une vitesse de dissolution de cette phase significativement supérieure à celle des matériaux de pièces et de contre-formes dans des conditions de décochage choisies (milieu, température, pression) ; ou
- Une résistance mécanique plus faible que les matériaux M1 et M2.

Le frittage peut être réalisé par frittage sous compaction uni-axiale à chaud. De préférence, la densification par frittage est réalisée par frittage flash (encore appelé frittage SPS, acronyme anglais de « Spark Plasma Sintering »), notamment à une pression variant de 1 MPa à 100 MPa, voire de 10 MPa à 80 MPa, ou par compaction uniaxiale à chaud (encore appelée CUC).

Le frittage SPS comprend le chauffage d'un moule électriquement conducteur, de préférence en graphite, qui contient la poudre à fritter et la contre-forme. La poudre est comprimée uniaxialement au moyen de pistons de compaction, par exemple en graphite et le chauffage est opéré par effet Joule en soumettant le moule à des impulsions de courant électrique. Un exemple de dispositif pour mettre en oeuvre le procédé SPS est décrit par exemple dans l'ouvrage « Mise en forme de matériaux par frittage flash », Juil. 2006, Claude Estournes, Technique de l'ingénieur.

En particulier, la densification est réalisée dans une plage de température de frittage variant de 300°C à 2000°C, en particulier de 600°C à 2000°C, de préférence de 1000°C à 1900°C, notamment de 1150°C à 1750°C.

A l'issue du frittage, la pièce de forme complexe et la contre-forme adhèrent l'une et l'autre et forment un ensemble pré-pièce/contre-forme densifié. Il n'est avantageusement pas constaté, lors du refroidissement de l'ensemble, la manifestation de phénomènes de dilatation distincts entre la pièce et la contre-forme, susceptibles de créer des contraintes dans l'ensemble pré-pièce/contre-forme, notamment au niveau de la pièce de forme complexe. En particulier, les coefficients de dilatation de la pièce et de la contre-forme ne diffèrent pas de plus de 30%, en particulier de plus de 10%.

Afin d'isoler la pièce de forme complexe formée, il convient donc de la séparer de la contre-forme. Cette opération est couramment dénommée décochage. Dans certains cas, une couche intermédiaire a pu être formée à l'interface de la pièce et la contre-forme. Selon l'application souhaitée, cette couche intermédiaire peut être à conserver ou non en surface de la pièce de forme complexe isolée.

Comme précisé ci-dessus, le décochage de la pièce de forme complexe comprend au moins une étape de solubilisation sélective d'au moins un des composants de ladite contre-forme densifiée et/ou de l'éventuelle phase intermédiaire.

Selon un mode de réalisation particulier, le décochage de la pièce de forme complexe implique la solubilisation sélective du ou d'un composé B, non matriciel, de ladite contre-forme densifiée. Ce mode de réalisation est privilégié lorsqu'il n'y a pas de phase intermédiaire entre la contre-forme et la pièce de forme complexe, ou lorsque la phase intermédiaire présente en surface de la pièce est à préserver.

En particulier, une densification moindre de la contre-forme permet d'augmenter la cinétique de dissolution sélective lors du décochage.

Selon un autre mode de réalisation particulier, le décochage de la pièce de forme complexe peut être réalisé en présence d'une phase intermédiaire en surface de ladite pièce de forme complexe et par solubilisation sélective de ladite phase intermédiaire. Ce mode de réalisation est avantageusement mis en oeuvre lorsque la présence de la phase intermédiaire n'est pas souhaitée à la surface de la pièce de forme complexe.

Bien entendu, il est également possible de solubiliser simultanément la phase intermédiaire et en partie la contre-forme.

Selon encore un autre mode de réalisation particulier, le décochage de la pièce de forme complexe peut être réalisé en présence d'une phase intermédiaire en surface de ladite pièce de forme complexe et en conservant ladite phase intermédiaire. Ce mode de réalisation est avantageusement mis en oeuvre lorsque la présence de la phase intermédiaire est souhaitée à la surface de la pièce de forme complexe.

Cette solubilisation sélective peut être réalisée par immersion dans un milieu réactionnel chimique, notamment acide ou basique, en particulier à une température allant de 20 °C à 250°C, en autoclave ou à pression ambiante. La solubilisation sélective peut notamment être réalisée par immersion de l'ensemble dans ou, du moins, la mise en contact de l'interface pièce de forme complexe/contre-forme avec une solution solubilisante du composant à solubiliser, par exemple une solution de soude lorsqu'il s'agit d'un composé B figuré par du Zircon ($ZrSiO_4$).

Comme le confirme le terme « sélective » cette solubilisation est inopérante à l'égard de la pièce à forme complexe et n'altère donc pas son intégrité.

La solution acide ou basique peut être sélectionnée en se basant sur les domaines de stabilité du matériau de la contre forme et de la pièce en milieux acides et/ou basiques bien connus de l'homme du métier. De préférence, une combinaison milieu réactionnel / température / pression qui maximise l'écart de vitesse de dissolution entre la pièce et la contre-forme est sélectionnée pour le décochage des assemblages pièce/contre-forme frittés.

La dissolution sélective de la phase intermédiaire permet la séparation des deux entités constituant l'ensemble.

La dissolution sélective du composé B engendre une porosité au sein de la contre-forme ce qui a pour effet d'altérer sa résistance mécanique et donc de permettre d'éliminer mécaniquement et sans impacter la pièce de forme complexe, le résidu de contre-forme. Le procédé peut alors comprendre, consécutivement à cette étape de solubilisation sélective, dite encore dissolution sélective, une étape de retrait par action mécanique de la contre-forme résiduelle, qui peut notamment être éliminée par sablage, par brossage, par microbillage, par polissage, par tribofinition, par vibrations, par ultrasons et/ou par chocs.

**Procédé de fabrication d'une contre-forme convenant notamment à la réalisation d'une pièce de forme complexe selon le procédé de l'invention**

Comme énoncé ci-dessus, la présente description décrit également un procédé de fabrication d'une contre-forme densifiable, utile pour la préparation d'une pièce de forme complexe selon le procédé de fabrication d'une pièce de forme complexe conforme à l'invention, comprenant au moins les étapes consistant à

- Réaliser par fabrication additive un objet organique/inorganique à partir d'au moins un liant organique et d'au moins un mélange comprenant au moins un composant matriciel A et au moins un composé B, inorganiques,
- Délianter ledit objet organique/inorganique ainsi formé pour en éliminer sa composante organique,
- Fritter ledit objet ainsi obtenu pour former une contre-forme densifiable.

En particulier, en étape de déliantage, un objet constitué des composants A et B est formé. Pour mémoire, les techniques de fabrication additive sont privilégiées pour la fabrication de produits métallurgiques ou céramiques de formes complexes, difficiles ou impossibles à finaliser simplement par frittage ou par coulage d'une matière en fusion.

De nombreuses techniques de fabrication additive, notamment sur lit de poudre, connues de l'homme du métier peuvent être utilisées pour réaliser l'objet organique/inorganique.

De préférence, l'objet organique/inorganique peut être réalisé par fabrication additive à partir d'un mélange d'au moins une résine photopolymérisable et d'au moins un composant matriciel A et au moins un composé B, inorganiques, en particulier par stéréolithographie (encore nommée SLA).

En alternative, l'objet organique/inorganique peut être réalisé par fabrication additive par pulvérisation d'au moins un liant sur une poudre comportant au moins un composant matriciel A et au moins un composé B, inorganiques, en particulier par fabrication additive par projection de liant (aussi appelée « *binder jetting* » en anglais).

Selon l'invention, la technique de fabrication additive est de préférence une technique de stéréolithographie ou par projection de liant, qui sont des technologies familières et n'ont pas lieu d'être donc détaillées, plus préférentiellement une technique de stéréolithographie. Ainsi, une contre-forme convenant à l'invention peut être établie à partir d'un objet organique/inorganique formé selon cette technique de stéréolithographie, en déposant et en insolant couche par couche à l'aide d'une source de lumière UV, un mélange d'au moins une résine photopolymérisable et d'au moins un composant matriciel A et au moins un composé B inorganiques, pour permettre à la résine de photopolymériser.

En particulier, le liant organique peut comprendre au moins une résine photopolymérisable, notamment choisie parmi la famille des acrylates et leurs mélanges.

Quant aux composés A et B inorganiques, ils sont avantageusement tels que définis précédemment à titre de composants du matériau M2. Dans une variante de réalisation préférée, le rapport massique entre les composés A et B inorganiques est ajusté pour permettre d'obtenir une contre-forme dont la densification par frittage, notamment la gamme de température de frittage, est compatible avec celle d'un matériau dédié à former, à son contact et par compaction uni-axiale, une pièce de forme complexe. En particulier, le rapport massique entre les composés A et B inorganiques est ajusté pour permettre d'obtenir une contre-forme dont le CTE est compatible avec celui d'un matériau dédié à former, à son contact et par compaction uni-axiale, une pièce de forme complexe.

En particulier, les composés A et B peuvent être mis en oeuvre sous la forme d'un mélange de deux poudres inorganiques, l'une comprenant au moins le composant matriciel A et l'autre au moins le composé B.

L'objet organique/inorganique obtenu par fabrication additive est ensuite délianté pour en éliminer sa composante organique. Cette opération classique peut être réalisée par traitement thermique ou par l'action d'un solvant.

De préférence, l'étape de déliantage de la contre-forme est réalisée thermiquement, en particulier à une température variant de 200°C à 600°C et notamment avec une vitesse de montée en température variant de 0,1 et 1°C/min.

L'objet inorganique ainsi obtenu après déliantage est alors fritté pour former une contre-forme densifiable.

Le frittage peut notamment être réalisé dans des conditions permettant une densification seulement partielle de ladite contre-forme, c'est-à-dire l'obtention d'une contre-forme densifiable, de préférence à une température allant de 600°C à 2200°C, en particulier de 600°C à 1400°C.

Selon une variante préférée, ce procédé comprend en outre au moins les étapes consistant à

- disposer de la densité relative du matériau devant être densifié par frittage par compaction uni-axiale pour former une pièce de forme complexe, au contact de ladite contre-forme à fabriquer et
- ajuster le frittage dudit objet pour former une contre-forme dont la densité relative est telle que sa différence avec la densité relative du matériau, devant être fritté à son contact, est de moins de 25 %, en particulier moins de 20%, de préférence moins de 5 %.

A cette fin, une courbe de calibration de la densité relative en fonction de la température de frittage peut être préalablement mesurée, à l'image par exemple de celle représentée en figure 3.

En particulier, l'objet peut être fritté à une température allant de 600°C à 2200°C, de préférence de 800°C à 1400°C, pendant une durée allant de 1h à 10h, de préférence de 1h à 2h. Cette température de frittage peut être atteinte en augmentant la température à une vitesse de 10 à 30 K/h à partir de la température de déliantage.

Pour obtenir la contre-forme densifiable attendue, la température est ensuite diminuée jusqu'à la température ambiante, à une vitesse allant de 20 à 80 K/h.

Dans le cadre de l'invention, le procédé tel que défini ci-dessus peut être réalisé préliminairement à la mise en oeuvre d'un procédé de fabrication d'une pièce de forme complexe notamment conforme à l'invention.

En particulier, la contre-forme densifiable considérée pour le procédé de fabrication d'une pièce de forme complexe conforme à l'invention peut avoir été obtenue conformément au présent procédé de préparation d'une contre-forme.

En particulier, la contre-forme densifiable obtenue par le procédé de fabrication d'une contre-forme densifiable est une contre-forme densifiable telle que définie précédemment. Elle peut en particulier être constituée d'un matériau M2 tel que décrit précédemment.

**Méthode pour déterminer l'adéquation d'un matériau M2 à constituer la contre-forme d'une pièce de forme complexe**

Comme il ressort de ce qui précède, les inventeurs ont constaté l'impact positif de considérer une contre-forme possédant une gamme de température de frittage similaire à celle du matériau considéré pour fabriquer, à son contact et par frittage par compaction uni-axiale, une pièce de forme complexe, avec en particulier une vitesse de densification similaire à celle du matériau considéré pour fabriquer, à son contact et par frittage par compaction uni-axiale, une pièce de forme complexe.

L'invention vise ainsi également une méthode utile pour déterminer l'adéquation d'un matériau M2 à constituer la contre-forme d'une pièce de forme complexe à former par frittage par compaction uni-axiale d'un matériau M1, ladite méthode comprenant au moins les étapes consistant à

- Disposer de la courbe de la vitesse de densification par frittage par compaction uni-axiale et en fonction de la température, du matériau M1, CVD1,
- Disposer de la courbe de la vitesse de densification par frittage par compaction uni-axiale et en fonction de la température, du matériau M2, CVD2 et,
- Déterminer si l'écart des températures minimales de frittage et maximales de frittage entre chacun des matériaux M1 et M2, est inférieur ou égal à 50°C,

un écart inférieur ou égal à 50°C traduisant l'adéquation du matériau M2 à former une contre-forme pour la réalisation de ladite pièce de forme complexe.

En particulier, les matériaux M1 et/ou M2 sont tels que décrits précédemment.

Selon une variante, la différence entre les températures auxquelles les matériaux M1 et M2 sont au maximum de leur vitesse de densification respective, « |Tvmax (M1) - Tvmax (M2)1 » est en outre inférieure à 50°C.

Cette méthode peut être mise en oeuvre préalablement au procédé de fabrication d'une contre-forme tel que décrit précédemment pour déterminer la composition du matériau M2.

**Brève description des dessins**

[Fig 1] illustre schématiquement un procédé d'obtention d'une pièce de forme complexe par un procédé de compaction uniaxiale à chaud sans la mise en oeuvre de contre-forme, la densification étant inhomogène (haut) et avec la mise en oeuvre d'une contre-forme, l'homogénéité de la densification étant améliorée (bas).

[Fig 2] représente un exemple de vitesse de densification [Fig 2a] en $s^{-1}$ et une courbe de densification [Fig 2b] en fonction de la température, mesurées pour une poudre de composite $SiO_2/ZrSiO_4$ comprenant 8% de $ZrSiO_4$ avec une rampe de montée en température à une vitesse de 100K/min sous une pression de 50 MPa et obtenues selon le procédé décrit dans le paragraphe MATERIELS ET METHODES ci-après. La valeur Tvmax [Fig 2a] correspond à la température à laquelle la vitesse de densification est maximale, Tmin et Tmax [Fig 2b] respectivement les températures minimales et maximales de densification.

[Fig 3] représente la densité relative en ordonnée, exprimée en pourcentage, obtenue pour les contre-formes de $ZrSiO_4/SiO_2$ formées aux exemples 1 et 2 pour différentes températures de frittage.

[Fig 4] représente le profil de température mis en oeuvre pour le déliantage et le frittage pour former une contre-forme de $ZrSiO_4/SiO_2$ de densité relative 67% tel que décrit en exemple 1.

[Fig 5] représente l'assemblage mis en oeuvre pour le frittage SPS par compaction uni-axiale des éléments à fritter (contre-forme prédensifiée + matériau M1), comme décrit dans le paragraphe Matériels et méthodes ci-après.

[Fig 6] représente les vitesses de densification de la silice ($SiO_2$) et du zircon ($ZrSiO_4$), normalisées par la vitesse maximale de densification, en fonction de la température, mesurées selon le protocole décrit dans le paragraphe Matériels et méthodes ci-après en appliquant une rampe de montée en température à une vitesse de 100K/min sous une pression de 50 MPa.

[Fig 7] représente une contre-forme fabriquée par SLA (stéréolithographie, « StereoLithography Apparatus » en anglais) en composite $SiO_2/ZrSiO_4$ (à gauche) et la pièce en titane obtenue par le procédé selon l'invention tel que décrit en exemple 3 (à droite).

[Fig 8] représente une contre-forme fabriquée par SLA en composite $SiO_2/ZrSiO_4$ (à gauche) et la pièce en cuivre obtenue par le procédé selon l'invention tel que décrit en exemple 3 (à droite) comportant une texturation en surface.

[Fig 9] représente une contre-forme en deux parties fabriquées par SLA, pour permettre le remplissage, en composite $SiO_2/ZrSiO_4$ (à gauche) et la pièce en TA6V obtenue par le procédé selon l'invention tel que décrit en exemple 3, comportant un trou (à droite) ;

[Fig 10] représente une contre-forme en composite $SiO_2/ZrSiO_4$ (à gauche) et la pièce en titane obtenue par le procédé selon l'invention tel que décrit en exemple 3, correspondant au rouet d'une pompe et comportant différentes sections et un engrenage au centre (à droite).

**Exemple**

**MATERIELS ET METHODES**

**Protocole de fabrication d'une contre-forme**

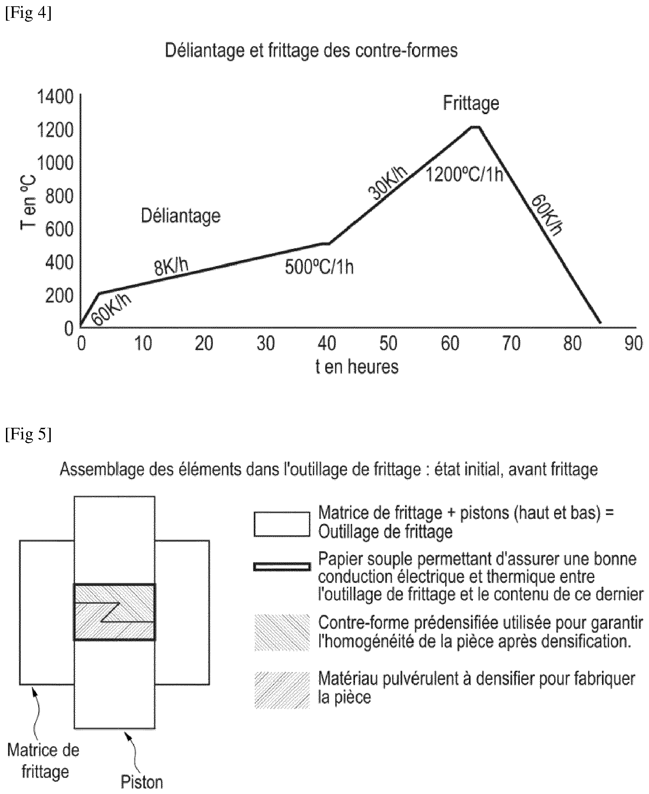

Les composants de la contre-forme considérés sont mélangés dans des proportions données à une résine photopolymérisable de type acrylate. D'autres résines polymérisables bien connues pour la stéréolithographie peuvent également être mises en oeuvre. La résine chargée en particules est étalée et photopolymérisée couche par couche par une méthode de fabrication additive en mettant en oeuvre un procédé de stéréolithographie.
L'appareillage de stéréolithographie est un appareil Prodways M120.
L'objet obtenu est ensuite nettoyé, chauffé et délianté thermiquement pour éliminer la partie organique. L'objet inorganique ainsi obtenu est ensuite fritté à une température de frittage ajustée pour obtenir une densité donnée. L'objet est ensuite refroidi à la température ambiante pour obtenir la contre-forme densifiable. Un exemple de profil de température mis en oeuvre pour la fabrication d'une contre-forme est représenté en figure 4.

**Protocole de fabrication d'une pièce de forme complexe à l'aide d'une contre-forme**

La pièce est formée dans l'assemblage représenté en figure 5. Cet assemblage comprend un outillage de frittage formé de deux pistons et d'une matrice de frittage en graphite. Un papier graphite souple (papyex®) est déposé sur les faces internes de l'outillage dédiées à être mises en contact avec les éléments à fritter. Le papier souple permet d'assurer une bonne conduction électrique et thermique entre l'outillage de frittage et les éléments à fritter.
La contre-forme prédensifiée considérée, est placée dans l'outillage de frittage en contact avec le matériau pulvérulent dédié à former la pièce, l'ensemble formé de la contre-forme et du matériau pulvérulent, étant en contact avec le papier souple.
La pièce est alors formée par frittage SPS (ou frittage flash) par compaction uni-axiale en appliquant une rampe de température donnée et en appliquant sur les pistons une pression donnée. L'ensemble formé de la pièce frittée et de la contre-forme densifiée est obtenu et extrait de l'outillage de frittage.

**Méthode pour le décochage de la contre-forme**

L'ensemble formé de la pièce frittée et de la contre-forme densifiée est immergé dans une solution acide ou basique. La durée, la température et la pression sont adaptées selon la nature du composé à dissoudre. Par exemple, le décochage peut être réalisé dans un autoclave ou à pression ambiante.

**Méthode pour la caractérisation de la vitesse de densification d'un matériau**

La première étape, appelée essai fenêtre, consiste à réaliser par SPS (ou frittage flash) une rampe de montée en température à une vitesse de 100 K/min depuis la température ambiante et sous pression, par exemple en fixant une pression de 50 MPa, de la poudre que l'on souhaite densifier. Cette première étape peut être ajustée, notamment si les résultats ne sont pas satisfaisants, en modifiant la pression à laquelle est réalisé l'essai, tout en conservant la même vitesse de montée en température et la même gamme de températures. Lors de cet essai, le déplacement des pistons est enregistré. La rampe de montée en température est arrêtée après la densification totale de la poudre et l'ensemble est refroidi.
Une seconde acquisition de données est ensuite réalisée après refroidissement de l'ensemble (outillage + poudre totalement densifiée, c'est-à-dire non densifiable). La même rampe de température est réalisée et le déplacement des pistons est une nouvelle fois enregistré. Cette acquisition constitue le blanc, seules la dilatation de la poudre totalement densifiée et celle de l'outillage étant mesurées.
Après avoir réalisé les deux acquisitions, la densité et les dimensions finales de la pièce frittée sont mesurées.
La densification est déterminée à partir des deux acquisitions, selon les étapes suivantes :

- soustraction du déplacement des pistons de la deuxième acquisition à celui de la première acquisition,
- détermination de la densité et des dimensions de la poudre totalement densifiée,
- détermination de la densité instantanée de la poudre en cours d'essai en fonction de la température, à partir de la soustraction du déplacement des pistons entre les deux acquisitions, de la densité et des dimensions de la poudre totalement densifiée comme détaillé précédemment,
- normalisation de la densité instantanée de la poudre en cours d'essai par la densité de la poudre totalement densifiée pour obtenir la densité relative.

A partir de ces valeurs, la courbe de vitesse de densification relative de la poudre en fonction de la température peut être calculée et tracée selon la formule suivante :

[Math 1]

$$\frac{1}{D}\frac{dD}{dT} = f(T)$$

Avec D étant la densité instantanée de la poudre en cours d'essai et T la température.

**EXEMPLE 1** : **Etablissement d'une contre-forme de SiO$_2$/ZrSiO$_4$**

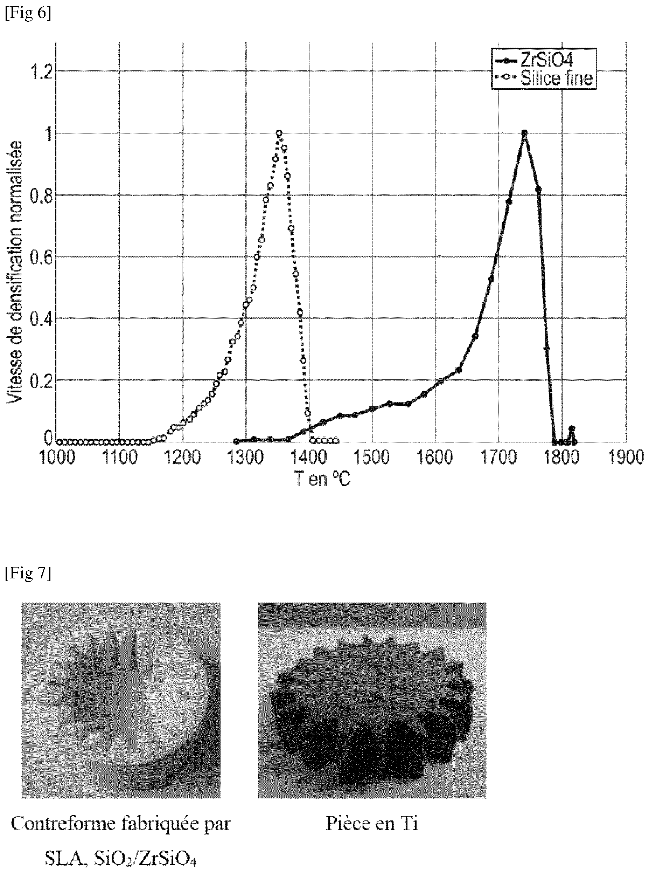

Comme illustré en figure 6, la silice peut être densifiée entre 1150 et 1400°C et le ZrSiO$_4$ entre 1370 et 1780°C avec une vitesse de chauffe de 100 K/min. Selon l'ajustement du rapport molaire de ces deux composés dans un matériau M2, la gamme de température convenant à la densification de ce matériau sera impactée.

Une contre-forme est formée selon le protocole décrit dans le chapitre intitulé Matériels et Méthodes, en considérant un mélange SiO$_2$/ZrSiO$_4$ dont la fraction massique de ZrSiO$_4$ est 8%.

Plus précisément, l'objet organique/inorganique correspondant, formé par fabrication additive est nettoyé puis chauffé jusqu'à 200°C en lui appliquant une rampe de température de 60 K/h. Il est ensuite délianté en appliquant une rampe de température de 8 K/h entre 200°C et 500°C pendant 33 h puis un palier à 500°C pendant 1h pour éliminer la partie organique. Cet objet est ensuite fritté en appliquant une rampe en température de 30 K/h entre 500°C et 1200°C pendant environ 23 h puis un palier à la température de frittage de 1200°C pendant 1h pour atteindre une densité relative de 67%. L'objet est ensuite refroidi par une rampe en température de 60 K/h jusqu'à la température ambiante pour obtenir la contre-forme, qui est densifiable.

La figure 4 rend compte du profil de température mis en oeuvre pour le déliantage et le frittage considéré pour former cette contre-forme. La contre-forme obtenue possède une densité relative de 67%.

**EXAMPLE 2 : Impact de la variation de la température de frittage sur la densité d'une contre-forme selon l'invention**

Le protocole décrit en exemple 1 est reproduit en considérant des températures de frittage de respectivement, 1000°C, 1100°C, 1250°C et 1300°C au lieu de la valeur 1200°C.

La figure 3 rend compte des valeurs de densités relatives obtenues pour chacune de ces températures de frittage.

**EXEMPLE 3 : Fabrication d'une pièce de forme complexe avec une contre-forme de l'exemple 1**

La contre-forme ainsi obtenue selon le procédé décrit en exemple 1, d'une densité relative de 67%, est placée dans l'outillage de frittage décrit dans le chapitre intitulé matériels et méthodes avec un matériau pulvérulent formé au choix de TA6V, TiAl, Ti, WC/x Co (x de 0 à 12%), ou Cu.

Ce matériau pulvérulent, dédié à former la pièce, est mis en contact d'une part avec la contre-forme et d'autre part avec le papier souple déposé sur les faces internes de l'outillage dédiées à être mises en contact avec les éléments à fritter. Autrement dit, aucun papier souple n'est positionné entre le matériau pulvérulent dédié à former la pièce et la contre-forme.

La pièce est alors formée par frittage SPS par compaction uni-axiale en appliquant une rampe de température à une vitesse de 100 K/min et en appliquant sur les pistons une pression de 50 MPa. Un ensemble formé de la pièce frittée et de la contre-forme densifiée est obtenu et extrait de l'outillage de frittage.

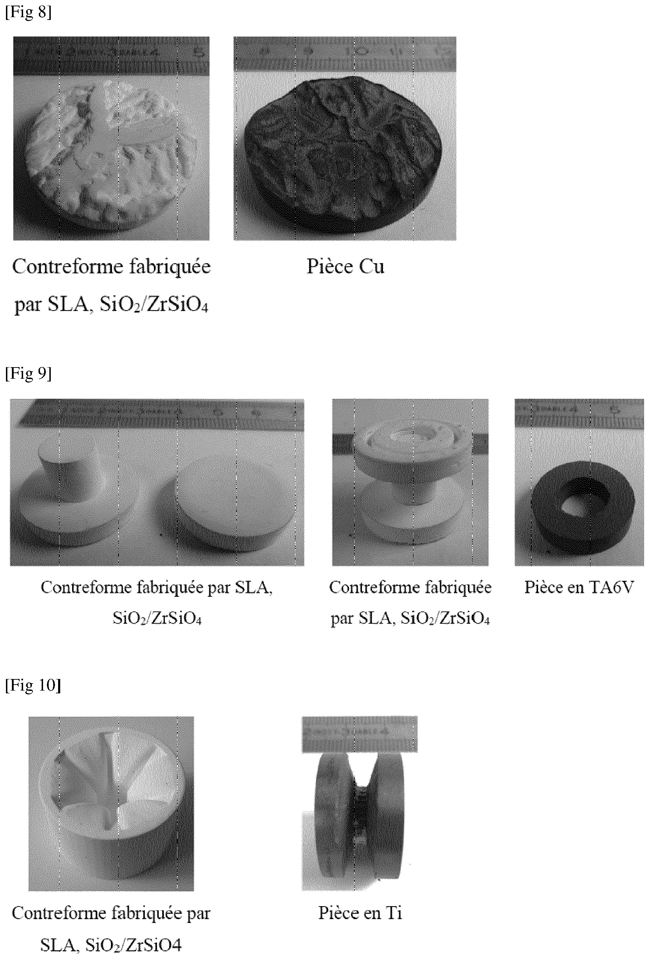

Cet ensemble est immergé dans une solution de soude à 1 mol/L pendant 1h jusqu'à dissolution de la phase de ZrSiO$_4$, les phases formant la pièce étant stables dans ces conditions. L'ensemble est ensuite lavé, et séché. La contre-forme, désormais fortement poreuse suite à la dissolution, est alors éliminée par action mécanique légère afin d'obtenir la pièce, par exemple par retrait manuel, brossage et/ou sablage léger à la microbille de verre. Des exemples de pièces de forme complexes obtenues par le procédé décrit ci-dessus, mettant en oeuvre les contre-formes obtenues en exemple 1 ou 2, sont présentés en figures 7 à 10. Elles sont formées à partir d'une poudre de titane (figures 7 et 10), à partir d'une poudre de cuivre (figure 8) ou d'une poudre de TA6V (figure 9).

Comme il ressort de ces figures, des formes complexes sont obtenues, telles qu'un engrenage (figure 7), une texturation de type bas-relief (figure 8), une pièce trouée (figure 9) ou encore un rouet de pompe comportant un engrenage au centre (figure 10).

Ainsi, les pièces obtenues possèdent des formes que l'on ne peut pas obtenir par des procédés de compaction uniaxiale à chaud sans l'utilisation de contre-formes selon l'invention.

De plus, les pièces obtenues ont des propriétés usuelles de pièces fabriquées par SPS (rétention des faibles tailles de grains, bonnes propriétés mécaniques, optiques, thermiques), et possèdent une densité homogène.

**Revendications**

**1.** Procédé de fabrication d'une pièce de forme complexe par frittage par compaction uni-axiale et à chaud, **caractérisé en ce qu'**il comprend au moins les étapes consistant à :

- Disposer d'un matériau pulvérulent M1 dédié à constituer ladite pièce de forme complexe,
- Disposer d'une contre-forme de ladite pièce de forme complexe,
- Densifier par frittage par compaction uni-axiale et à une température variant de 300 à 2200°C, ledit matériau M1 au contact de ladite contre-forme, en formant le cas échéant une phase intermédiaire à l'interface de ladite pièce de forme complexe et de ladite contre-forme densifiées,
- Disposer de l'ensemble pré-pièce/contre-forme densifié ainsi formé, et
- Décocher ladite pièce de forme complexe dudit ensemble,

**caractérisé en ce que** ladite contre-forme est sous une forme densifiable et constituée d'un matériau M2 comprenant au moins un composant matriciel A et au moins un composé B inorganiques, le matériau M2 possédant une teneur en composé(s) B variant de 0,5 % en poids à 50 % en poids par rapport à son poids total, et **en ce que** ledit décochage comprend au moins la solubilisation sélective dudit composé B et/ou de l'éventuelle phase intermédiaire.

**2.** Procédé selon la revendication 1, dans lequel lesdits matériaux M1 et M2 possèdent des plages de température de densification par frittage telles que la température maximale de frittage Tmax(M1) du matériau M1 est inférieure ou égale à la température maximale de frittage Tmax(M2) du matériau M2 ; et/ou

la température maximale de frittage Tmax(M1) du matériau M1 est supérieure à la température pour laquelle le matériau M2 est au maximum de vitesse de densification Tvmax(M2) ; et/ou
lesdits matériaux M1 et M2 possèdent des cinétiques de densification telles que la différence entre les températures auxquelles les matériaux M1 et M2 sont au maximum de leur vitesse de densification respective, « |Tvmax (M1) - Tvmax (M2)1 » est inférieure à 50°C.

**3.** Procédé selon l'une quelconque des revendications précédentes, dans lequel lesdits matériaux M1 et M2 possèdent des plages de température de densification par frittage telles que la différence entre les températures minimales de frittage Tmin(M1) du matériau M1 et Tmin(M2) du matériau M2, « |Tmin (M1) - Tmin (M2)1 » est inférieure à 300°C, voire inférieure à 100°C, la température Tmin(M2) étant de préférence inférieure au maximum de vitesse de densification Tvmax(M1) du matériau M1.

**4.** Procédé selon l'une quelconque des revendications précédentes, dans lequel ladite contre-forme densifiable possède une densité relative telle que sa différence avec la densité relative du matériau M1 non densifié est de moins de 25 %, en particulier moins de 20 %, de préférence moins de 5 %.

**5.** Procédé selon l'une quelconque des revendications précédentes dans lequel le composant matriciel A est choisi parmi la silice (SiO$_2$), la zircone yttriée dite « poudre d'YSZ », le nitrure de silicium (Si$_3$N$_4$), le carbure de bore (B$_4$C), le carbure de silicium (SiC), le nitrure de bore, notamment hexagonal (h-BN), et leurs mélanges et de préférence comprend au moins de la silice.

**6.** Procédé selon l'une quelconque des revendications précédentes dans lequel ledit matériau M2 comprend au moins un composé B choisi parmi le zircon, le nitrure de bore hexagonal et la silice, notamment parmi le zircon et la silice, de préférence comprend au moins le zircon.

**7.** Procédé selon l'une quelconque des revendications précédentes, dans lequel la teneur en composé(s) B dans le matériau M2 est supérieure ou égale au seuil de percolation volumique du composé B dans le composant A.

**8.** Procédé selon l'une quelconque des revendications précédentes dans lequel le matériau M2 est choisi parmi les mélanges h-BN/SiO$_2$ Si$_3$N$_4$/SiO$_2$, SiC/SiO$_2$, h-BN/ZrSiO$_4$, Si$_3$N$_4$/ZrSiO$_4$, SiC/ZrSiO$_4$, ou SiO$_2$/ZrSiO$_4$, de préférence

est le composite $SiO_2/ZrSiO_4$.

9. Procédé selon l'une quelconque des revendications précédentes, dans lequel le matériau M1 comprend au moins du titane, du cuivre, un alliage de titane, un alliage de nickel, un alliage de fer, un alliage d'aluminium, un alliage de cuivre, du carbure de titane, du carbure de tungstène, du carbure de tungstène-cobalt, du nitrure d'aluminium, du nitrure de gallium, du nitrure de silicium, du silicium, un alliage de silicium, ou leurs mélanges, de préférence au moins du titane, du cuivre, un alliage de titane, un alliage de nickel, du carbure de tungstène-cobalt ou leurs mélanges, plus préférentiellement comprend au moins du titane, un alliage de titane et/ou du carbure de tungstène-cobalt et en particulier est du WC comprenant 6 à 12% de Co, du TA6V, du TiAl, ou du Ti.

10. Procédé selon l'une quelconque des revendications précédentes mettant en présence un couple de matériaux M1/M2 choisi parmi WC comprenant 6 à 12% de Co (M1) / Composite $SiO_2/ZrSiO_4$ (M2), TA6V (M1) / Composite $SiO_2/ZrSiO_4$ (M2), TiAl (M1) / Composite $SiO_2/ZrSiO_4$ (M2), Ti (M1) / Composite $SiO_2/ZrSiO_4$ (M2), WC (M1) / Composite SiC/h-BN (M2), WC (M1) / Composite $Si_3N_4$/h-BN (M2), WC (M1) / Composite h-BN/$SiO_2$ (M2), WC (M1)/ Composite h-BN/SiC/$Si_3N_4$ (M2), WC comprenant 6 à 12% de Co (M1) / Composite SiC/ h-BN (M2), WC comprenant 6 à 12% de Co (M1) / $Si_3N_4$/h-BN (M2), WC comprenant 6 à 12% de Co (M1) / h-BN/$SiO_2$(M2), WC comprenant 6 à 12% de Co (M1) / h-BN/SiC/$Si_3N_4$ (M2), Ti (M1) / Composite YZS/ $SiO_2$ (M1), TiAl/ Composite YZS/ $SiO_2$ (M1), TA6V (M1) / Composite YZS/ $SiO_2$, ou couple Cu (M1) / Composite $SiO_2$/ $ZrSiO_4$.

11. Procédé selon l'une quelconque des revendications précédentes dans lequel la densification est réalisée dans une plage de température de frittage variant de 300°C à 2000°C, en particulier de 600°C à 2000°C, de préférence de 1000°C à 1900°C, notamment de 1150°C à 1750°C.

12. Procédé selon l'une quelconque des revendications précédentes dans lequel la densification est réalisée par frittage flash (encore appelé frittage SPS, acronyme anglais de « Spark Plasma Sintering »), ou par compaction uniaxiale à chaud.

13. Procédé selon l'une quelconque des revendications précédentes dans lequel le décochage implique la solubilisation sélective du ou d'un composé B de la contre-forme densifiée ; ou

    ledit décochage est réalisé en présence d'une phase intermédiaire en surface de ladite pièce de forme complexe et en conservant ladite phase intermédiaire ; ou
    ledit décochage est réalisé en présence d'une phase intermédiaire en surface de ladite pièce de forme complexe et par solubilisation sélective de ladite phase intermédiaire.

14. Procédé selon l'une quelconque des revendications précédentes dans lequel ladite solubilisation sélective est réalisée par immersion dans un milieu réactionnel chimique, notamment acide ou basique, en particulier à une température allant de 20°C à 250°C, en autoclave ou à pression ambiante.

15. Procédé selon l'une quelconque des revendications précédentes, comprenant consécutivement à la solubilisation sélective, une étape de retrait par action mécanique de la contre-forme résiduelle, notamment par sablage, brossage, microbillage, polissage, tribofinition, vibrations, ultrasons, et/ou chocs.

16. Procédé de fabrication d'une contre-forme densifiable utile pour la préparation d'une pièce de forme complexe selon le procédé selon l'une quelconque des revendications 1 à 15 comprenant au moins les étapes consistant à

    - Réaliser par fabrication additive un objet organique/inorganique à partir d'au moins un liant organique et d'au moins un mélange comprenant au moins un composant matriciel A et au moins un composé B, inorganiques, ledit liant organique comprenant en particulier au moins une résine photopolymérisable, notamment choisie parmi la famille des acrylates et leurs mélanges
    - Délianter ledit objet organique/inorganique ainsi formé pour en éliminer sa composante organique, l'étape de déliantage de la contre-forme étant en particulier réalisée thermiquement, plus particulièrement à une température variant de 200°C à 600°C et notamment avec une vitesse de montée en température variant de 0,1 et 1°C/min,
    - Fritter ledit objet ainsi obtenu pour former une contre-forme densifiable formée d'un matériau M2 possédant au moins le composant matriciel A et au moins le composé B, le matériau M2 possédant une teneur en composé(s) B variant de 0,5 % en poids à 50 % en poids par rapport à son poids total, le frittage étant en particulier réalisé dans des conditions permettant une densification seulement partielle de ladite contre-forme, de préférence à une température allant de 600°C à 2200°C, en particulier de 600 à 1400°C.

17. Procédé selon la revendication 16 dans lequel ledit composant A est choisi parmi la silice, la zircone yttriée dite « poudre d'YSZ », le nitrure de silicium ($Si_3N_4$), le carbure de bore ($B_4C$), le carbure de silicium (SiC), le nitrure de bore, notamment hexagonal (h-BN) et leurs mélanges et de préférence comprend au moins de la silice.

18. Procédé selon l'une quelconque des revendications 16 à 17 dans lequel ledit composé B est choisi parmi le zircon, le nitrure de bore hexagonal et la silice, notamment parmi le zircon et la silice, de préférence comprend au moins le zircon.

19. Procédé selon l'une quelconque des revendications 16 à 18 comprenant en outre au moins les étapes consistant à

- disposer de la densité relative du matériau devant être densifié par frittage par compaction uni-axiale pour former une pièce de forme complexe, au contact de ladite contre-forme à fabriquer et
- ajuster le frittage dudit objet pour former une contre-forme dont la densité relative est telle que sa différence avec la densité relative du matériau, devant être fritté à son contact, est de moins de 25 %, en particulier moins de 20%, de préférence moins de 5 %.

20. Méthode utile pour déterminer l'adéquation d'un matériau M2 à constituer la contre-forme d'une pièce de forme complexe à former par frittage par compaction uni-axiale d'un matériau M1, ladite méthode comprenant au moins les étapes consistant à

- Disposer de la courbe de la vitesse de densification par frittage par compaction uni-axiale et en fonction de la température, du matériau M1, CVD1,
- Disposer de la courbe de la vitesse de densification par frittage par compaction uni-axiale et en fonction de la température, du matériau M2, CVD2 et,
- Déterminer si l'écart des températures minimales de frittage et maximales de frittage entre chacun des matériaux M1 et M2, est inférieur ou égale à 50°C,
un écart inférieur ou égal à 50°C traduisant l'adéquation du matériau M2 à former une contre-forme pour la réalisation de ladite pièce de forme complexe,
ledit matériau M2 possédant au moins un composant matriciel A et au moins un composé B inorganiques, et possédant une teneur en composé(s) B variant de 0,5 % en poids à 50 % en poids par rapport à son poids total, la différence entre les températures auxquelles les matériaux M1 et M2 sont au maximum de leur vitesse de densification respective, « |Tvmax (M1) - Tvmax (M2)1 » étant en particulier en outre inférieure à 50°C.

[Fig 1]

[Fig 2a]

[Fig 2b]

[Fig 3]

[Fig 4]

Déliantage et frittage des contre-formes

[Fig 5]

Assemblage des éléments dans l'outillage de frittage : état initial, avant frittage

Matrice de frittage + pistons (haut et bas) = Outillage de frittage

Papier souple permettant d'assurer une bonne conduction électrique et thermique entre l'outillage de frittage et le contenu de ce dernier

Contre-forme prédensifiée utilisée pour garantir l'homogénéité de la pièce après densification.

Matériau pulvérulent à densifier pour fabriquer la pièce

Matrice de frittage

Piston

[Fig 6]

[Fig 7]

Contreforme fabriquée par
SLA, SiO$_2$/ZrSiO$_4$

Pièce en Ti

[Fig 8]

Contreforme fabriquée
par SLA, SiO$_2$/ZrSiO$_4$

Pièce Cu

[Fig 9]

Contreforme fabriquée par SLA,
SiO$_2$/ZrSiO$_4$

Contreforme fabriquée
par SLA, SiO$_2$/ZrSiO$_4$

Pièce en TA6V

[Fig 10]

Contreforme fabriquée par
SLA, SiO$_2$/ZrSiO4

Pièce en Ti

Europäisches
Patentamt

European
Patent Office

Office européen
des brevets

# RAPPORT DE RECHERCHE EUROPEENNE

Numéro de la demande

EP 23 18 4260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2020/070133 A1 (NORIMAT [FR]) 9 avril 2020 (2020-04-09) * alinéas [0028] – [0035] * * figure 2 * * revendications 1-3, 8, 11 * ----- | 1-20 | INV. B22F3/105 B22F3/14 B22F3/24 B28B1/00 B28B3/02 |
| A | WO 2017/077028 A1 (UNIV TOULOUSE III – PAUL SABATIER [FR]; CENTRE NAT RECH SCIENT) 11 mai 2017 (2017-05-11) * page 11, ligne 1 – page 16, ligne 2 * * figures 4-11 * ----- | 1-20 | B28B7/34 B33Y10/00 B33Y40/20 B33Y80/00 C04B35/14 C04B35/48 |
| A | WO 2020/070107 A1 (NORIMAT [FR]) 9 avril 2020 (2020-04-09) * revendications 1, 6, 13-15 * * alinéas [0023] – [0043] * * figures 1, 2 * ----- | 1-20 | C04B35/488 C04B35/645  ADD. B22F3/10 B22F3/12 |
| A | FR 3 088 016 A1 (UNIV PAUL SABATIER TOULOUSE 3 [FR]; CENTRE NAT RECH SCIENT [FR]) 8 mai 2020 (2020-05-08) * revendications 1, 5, 6 * * page 6, ligne 33 – page 7, ligne 17 * * page 8, lignes 4-16 * ----- | 1-20 | |
| A | FR 3 088 017 A1 (UNIV PAUL SABATIER TOULOUSE 3 [FR]; CENTRE NAT RECH SCIENT [FR]) 8 mai 2020 (2020-05-08) * revendications 1, 5, 6 * * figures 1, 2 * * page 6, lignes 6-26 * ----- -/-- | 1-20 | |

DOMAINES TECHNIQUES RECHERCHES (IPC)

B22F
B29C
B28B
B33Y
C04B

Le présent rapport a été établi pour toutes les revendications

| Lieu de la recherche | Date d'achèvement de la recherche | Examinateur |
|---|---|---|
| La Haye | 1 novembre 2023 | Traon, Nicolas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

## RAPPORT DE RECHERCHE EUROPEENNE

Numéro de la demande

EP 23 18 4260

| | DOCUMENTS CONSIDERES COMME PERTINENTS | | | |
|---|---|---|---|---|
| Catégorie | Citation du document avec indication, en cas de besoin, des parties pertinentes | Revendication concernée | CLASSEMENT DE LA DEMANDE (IPC) | |
| A | VAN DER LAAN A. ET AL: "Fully coupled electrothermal and mechanical simulation of the production of complex shapes by spark plasma sintering", JOURNAL OF THE EUROPEAN CERAMIC SOCIETY, vol. 41, no. 7, 1 juillet 2021 (2021-07-01), pages 4252-4263, XP093015395, AMSTERDAM, NL ISSN: 0955-2219, DOI: 10.1016/j.jeurceramsoc.2021.02.010 * le document en entier * ----- | 1-20 | | |
| A | MANIÈRE CHARLES ET AL: "Spark plasma sintering and complex shapes: The deformed interfaces approach", POWDER TECHNOLOGY, ELSEVIER, BASEL (CH), vol. 320, 19 juillet 2017 (2017-07-19), pages 340-345, XP085169020, ISSN: 0032-5910, DOI: 10.1016/J.POWTEC.2017.07.048 * le document en entier * ----- -/-- | 1-20 | DOMAINES TECHNIQUES RECHERCHES (IPC) | |

Le présent rapport a été établi pour toutes les revendications

| Lieu de la recherche | Date d'achèvement de la recherche | Examinateur |
|---|---|---|
| La Haye | 1 novembre 2023 | Traon, Nicolas |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 2 de 3

Europäisches
Patentamt

European
Patent Office

Office européen
des brevets

# RAPPORT DE RECHERCHE EUROPEENNE

Numéro de la demande

EP 23 18 4260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | ZHAO GUANG ET AL: "Creep mechanism of zircon-added silica ceramic cores formed by stereolithography", CERAMICS INTERNATIONAL, ELSEVIER, AMSTERDAM, NL, vol. 47, no. 12, 17 mars 2021 (2021-03-17) , pages 17719-17725, XP086571239, ISSN: 0272-8842, DOI: 10.1016/J.CERAMINT.2021.03.092 [extrait le 2021-03-17] | 16-19 | |
| A | * abrégé * * 2.1 Materials; page 17720 - page 17721 * * 2.2 Specimen fabrication for creep testing; page 17721 * * figure 1 * ----- | 1-15,20 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 1 novembre 2023 | Traon, Nicolas |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.................................................................................
& : membre de la même famille, document correspondant

EPO FORM 1503 03.82 (P04C02)

page 3 de 3

## ANNEXE AU RAPPORT DE RECHERCHE EUROPEENNE
## RELATIF A LA DEMANDE DE BREVET EUROPEEN NO.

EP 23 18 4260

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-11-2023

| Document brevet cité au rapport de recherche | Date de publication | Membre(s) de la famille de brevet(s) | | Date de publication |
|---|---|---|---|---|
| WO 2020070133 A1 | 09-04-2020 | CA | 3113295 A1 | 09-04-2020 |
| | | CN | 112789130 A | 11-05-2021 |
| | | EP | 3860783 A1 | 11-08-2021 |
| | | FR | 3086567 A1 | 03-04-2020 |
| | | IL | 281758 A | 31-05-2021 |
| | | JP | 2022501230 A | 06-01-2022 |
| | | US | 2022032498 A1 | 03-02-2022 |
| | | WO | 2020070133 A1 | 09-04-2020 |
| WO 2017077028 A1 | 11-05-2017 | CA | 3003545 A1 | 11-05-2017 |
| | | EP | 3370902 A1 | 12-09-2018 |
| | | FR | 3042992 A1 | 05-05-2017 |
| | | JP | 7066124 B2 | 13-05-2022 |
| | | JP | 2019502027 A | 24-01-2019 |
| | | US | 2018318931 A1 | 08-11-2018 |
| | | US | 2022266336 A1 | 25-08-2022 |
| | | WO | 2017077028 A1 | 11-05-2017 |
| WO 2020070107 A1 | 09-04-2020 | CA | 3113302 A1 | 09-04-2020 |
| | | CN | 112789128 A | 11-05-2021 |
| | | EP | 3860785 A1 | 11-08-2021 |
| | | FR | 3086566 A1 | 03-04-2020 |
| | | IL | 281757 A | 31-05-2021 |
| | | JP | 2022501509 A | 06-01-2022 |
| | | US | 2022032370 A1 | 03-02-2022 |
| | | WO | 2020070107 A1 | 09-04-2020 |
| FR 3088016 A1 | 08-05-2020 | AUCUN | | |
| FR 3088017 A1 | 08-05-2020 | AUCUN | | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2831306 B1

**Littérature non-brevet citée dans la description**

- **CLAUDE ESTOURNES.** Mise en forme de matériaux par frittage flash. *Technique de l'ingénieur,* Juillet 2006